# EUROPEAN PATENT SPECIFICATION

(11) **EP 1 514 655 B1**
(45) Date of publication and mention of the grant of the patent: **30.11.2011**
(21) Application number: 04017252.0
(22) Date of filing: 22.07.2004
(51) Int. Cl.: B27G 19/00, B23D 49/16, B23D 59/00

(54) **A shoe assembly for a reciprocating tool**
Fussplattenanordnung für für hin- und hergehendes Werkzeug
Ensemble formant une semelle pour un outil à mouvement alternatif

(30) Priority: 09.09.2003 GB 0320998
(43) Date of publication of application: 16.03.2005
(73) Proprietor: Black & Decker Inc., Newark, Delaware 19711 (US)
(72) Inventor: Wilson, Mike, CO. Durham DL15 9TN (GB); Walmsley, Neil, Ferryhill, Co. Durham DL 17 8BQ (GB)
(74) Representative: Bell, Ian Stephen

(56) References cited:
- EP-A- 0 347 631
- EP-A- 1 260 299
- DE-A1- 19 925 748
- DE-U1- 29 910 173
- US-A- 3 938 251
- US-A- 4 665 617
- US-A- 5 038 481
- US-S1- D 451 356

## Description

The present invention relates to a shoe assembly for a reciprocating tool as per the preamble of claim 1. Such an assembly is disclosed by WO 93/03878.

Jigsaws are power tools which comprise a reciprocating saw blade for cutting a workpiece of wood or other material. Jigsaws generally comprise a body housing an electric motor and a drive mechanism to convert the rotary motion of an output shaft of the motor into reciprocal motion of the blade. Jigsaws are also provided with a supporting shoe in the form of a flat surface which rests on the workpiece and provides a reaction surface for cutting. The jigsaw body may also be able to pivot laterally about the longitudinal axis of the jigsaw to enable bevel cutting of the workpiece.

According to the present invention, there is provided a shoe assembly for a reciprocating tool having a body, a rotary output shaft and a working member adapted to execute reciprocating movement in response to rotation of said rotary output shaft, as per claim 1.

This provides the advantage that the guard means reinforces the shoe of the jigsaw.

The assembly may further comprise a dust guard adapted to engage said guard means.

This provides the advantage that dust is prevented from projecting in front of the tool and obscuring the view of the operator.

According to another aspect of the present invention, there is provided a reciprocating tool comprising:-
a body;
motor means having a rotary output shaft;
drive means for converting rotary movement of said output shaft to reciprocating movement of a working member; and
a shoe assembly as defined above.

In a preferred embodiment, said reciprocating tool comprises a jigsaw.

Said motor means may be an electric motor.

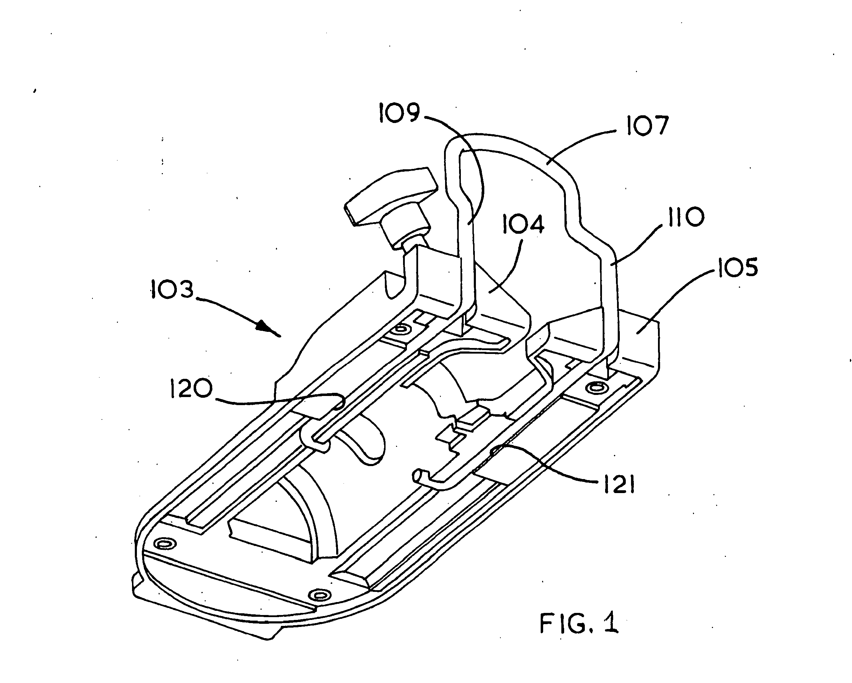

An embodiment of the present invention will now be described, by way of example only and not in any limitative sense, with reference to the accompanying drawing in which:-
Figure 1 is a perspective view of the underside of a base plate of an embodiment of the invention.

Referring to Figure 1, an embodiment of the present invention is shown. A jigsaw shoe 103 comprises two forwardly projecting arms 104, 105. In the front of the two forwardly projecting arms 104, 105 and in the underside of arms 104, 105, two slots 120, 121 are formed, the slots 120, 121 adapted to receive a guard rail 107. The upright portions 109, 110 of the guard rail 107 are bent, such that they can be resiliently received in slots 120, 121. By extending the upright portions 109, 110 into slots 120, 121 formed in the underside of the shoe, the rigidity of the shoe is reinforced.

By locating the upright portions 109,110 in the slots formed in the front of the two forwardly projecting arms 104, 105 the guard rail 107 is located at the most forward point of the jigsaw shoe 103.

It will be appreciated by persons skilled in the art that the above embodiment has been described by way of example only and not in any limitative sense, and that various alterations and modifications are possible without departure from the scope of the invention as defined by the appended claims.

## Claims

1. A shoe assembly for a reciprocating tool having a body, a rotary output shaft and a working member adapted to execute reciprocating movement in response to rotation of said rotary output shaft, the assembly comprising:-
a base plate (103) adapted to be mounted to said body of said tool and to engage a workpiece, wherein the base plate includes an aperture to allow the working member to pass therethrough during reciprocating movement thereof; and
a guard rail mounted to the base plate for restricting access to a working member a **characterized**
**in that** the base plate comprises two forwardly projecting arms (104,105)
in the front and underside of which two slots (121) are formed, the
slots receiving portions of the guard rail.

2. An assembly according to any one of the preceding claims, further comprising a dust guard adapted to engage said guard means.

3. An assembly according to any one of the preceding claims, wherein said guard rail is removable from said base plate.

4. A reciprocating tool comprising:-
a body;
motor means having a rotary output shaft;
drive means for converting rotary movement of said output shaft to reciprocating movement of a working member; and
a shoe assembly according to any one of the preceding claims.

5. A reciprocating tool according to claim 4, wherein said reciprocating tool comprises a jigsaw.

6. A reciprocating tool according to claim 4 or 5, wherein said motor means is an electric motor.

## Patentansprüche

1. Schuhbaugruppe für ein Pendelwerkzeug mit einem Körper, einer sich drehenden Abtriebswelle und einem Arbeitsglied, ausgelegt zum Ausführen einer Pendelbewegung als Reaktion auf eine Drehung der sich drehenden Abtriebswelle, wobei die Baugruppe Folgendes umfasst:
eine Basisplatte (103), die ausgelegt ist, um an dem Körper des Werkzeugs montiert zu werden und ein Werkstück in Eingriff zu nehmen, wobei die Basisplatte eine Öffnung enthält, damit das Arbeitsglied während seiner Pendelbewegung dort hindurchtreten kann; und
eine Schutzschiene, die an der Basisplatte montiert ist, um den Zugang zu einem Arbeitsglied zu beschränken,
**dadurch gekennzeichnet, dass** die Basisplatte zwei nach vorne vorstehende Arme (104, 105) umfasst, in deren Front und Unterseite zwei Schlitze (120, 121) ausgebildet sind, wobei die Schlitze Abschnitte der Schutzschiene aufnehmen.

2. Baugruppe nach einem der vorhergehenden Ansprüche, weiterhin umfassend einen Staubschutz, der ausgelegt ist, das Schutzmittel in Eingriff zu nehmen.

3. Baugruppe nach einem der vorhergehenden Ansprüche, wobei die Schutzschiene von der Basisplatte entfernt werden kann.

4. Pendelwerkzeug, das Folgendes umfasst:
einen Körper;
Motormittel mit einer sich drehenden Abtriebswelle;
Antriebsmittel zum Umwandeln einer Drehbewegung der Abtriebswelle in eine Pendelbewegung eines Arbeitsglieds; und
eine Schuhbaugruppe nach einem der vorhergehenden Ansprüche.

5. Pendelwerkzeug nach Anspruch 4, wobei das Pendelwerkzeug eine Stichsäge umfasst.

6. Pendelwerkzeug nach Anspruch 4 oder 5, wobei das Motormittel ein Elektromotor ist.

## Revendications

1. Ensemble formant semelle pour outil à mouvement alternatif ayant un corps, un arbre de sortie rotatif et un élément de travail adapté pour effectuer un mouvement alternatif en réponse à la rotation dudit arbre de sortie rotatif, l'ensemble comprenant :
une plaque de base (103) adaptée pour être montée sur
ledit corps dudit outil et pour s'engager sur une pièce, dans lequel la plaque de base comprend une ouverture pour permettre à l'élément de travail de la traverser au cours de son mouvement alternatif ; et
un rail de garde monté sur la plaque de base pour
limiter l'accès à un élément de travail, **caractérisé en ce que** la plaque de base comprend deux bras (104, 105) faisant saillie en avant, dans la partie avant et inférieure desquels sont formées deux fentes (120, 121), les fentes recevant des portions du rail de garde.

2. Ensemble selon l'une quelconque des revendications précédentes, comprenant en outre un garde-poussière adapté pour s'engager sur ledit rail de garde.

3. Ensemble selon l'une quelconque des revendications précédentes, dans lequel ledit rail de garde peut être retiré de ladite plaque de base.

4. Outil à mouvement alternatif comprenant :
un corps ;
des moyens motorisés ayant un arbre de sortie rotatif ;
des moyens d'entraînement pour convertir le mouvement rotatif dudit arbre de sortie en mouvement alternatif d'un élément de travail ; et
un ensemble formant semelle selon l'une quelconque des revendications précédentes.

5. Outil à mouvement alternatif selon la revendication 4, dans lequel ledit outil à mouvement alternatif comprend une scie sauteuse.

6. Outil à mouvement alternatif selon la revendication 4 ou 5, dans lequel lesdits moyens motorisés constituent un moteur électrique.
